# EUROPEAN PATENT SPECIFICATION

(11) **EP 3 682 737 B1**
(45) Date of publication and mention of the grant of the patent: **17.01.2024**
(21) Application number: 20152741.3
(22) Date of filing: 20.01.2020
(51) Int. Cl.: A01M 1/02

(54) **SYSTEM AND METHOD FOR COUNTING AGRICULTURAL PESTS INSIDE A TRAP**
SYSTEM UND VERFAHREN ZUM ZÄHLEN LANDWIRTSCHAFTLICHER SCHÄDLINGE IN EINER FALLE
SYSTÈME ET PROCÉDÉ DE COMPTAGE DE PARASITES AGRICOLES À L'INTÉRIEUR D'UN PIÈGE

(30) Priority: 21.01.2019 IL 26436719
(43) Date of publication of application: 22.07.2020
(73) Proprietor: Agrint Sensing Solutions Ltd, 4524188 Hod Hasharon (IL)
(72) Inventor: Ben Hamozeg, Yehonatan, Hod Hasharon, 4524188 (IL)
(74) Representative: Pearl Cohen Zedek Latzer Baratz UK LLP

(56) References cited:
- CN-A- 103 281 896
- PL-B1- 218 923
- US-A1- 2015 216 158
- US-A1- 2018 279 598
- US-B1- 6 393 760

## Description

### FIELD OF THE INVENTION

The present invention relates to monitoring agricultural pest control traps. More particularly, the present invention relates to systems and methods for detection and counting of pests.

### BACKGROUND OF THE INVENTION

In recent years many technological solutions have been suggested to reduce the damage carried out by agricultural pests, and particularly insects such as the Mediterranean fruit fly, that are harmful to a variety of crops such as citrus trees, deciduous trees and various sub-tropical species and therefore monitoring of the pests is required. Some of these solutions trap the insects and give an indication that at least one insect is trapped. Some traps use an optical sensor capable of indicating each time an insect enters the trap, however such traps require a substantial energy source and therefore must be connected to a power grid or being constantly under human supervision to maintain the operation with the energy source. Some traps have video cameras where the insects are counted by processing the images captured by the camera, however such traps are usually expensive and cannot provide an accurate count with a large number of insects inside the trap since the entire image is filled with insects so image processing cannot properly count all insects inside the trap.

One way to deal with the insects is releasing insecticide according to insect population monitoring with manually monitored traps. Once an increase in insect population is detected by the manual count of trapped insects, the release of pesticide can be triggered (e.g., also manually) and applied to contaminated areas. The lack of real time monitoring may cause delays in applying the pesticide to the crops, thus resulting in loss and/or damage to the crops. While there is a great variety of pest control traps, there is currently no way to automatically count how many insects have been trapped inside each trap without connecting traps to a substantial energy source. CN 103 281 896 discloses a method of counting insect and an insect counting apparatus according to the preamble of claim 1 and 5.

### SUMMARY OF THE INVENTION

There is thus provided, in accordance with some embodiments of the invention, a method of counting insects according to claim 1.

There is thus provided, in accordance with some embodiments of the invention, an insect counting device according to claim 5. Preferred embodiments are presented in the dependent claims.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1A schematically illustrates a cross-sectional view of an insect counting device, according to some embodiments of the invention;
Fig. 1B schematically illustrates a cross-sectional view of another insect counting device, according to some embodiments of the invention;
Fig. 2 schematically illustrates an insect monitoring system, according to some embodiments of the invention; and
Fig. 3 shows a flowchart for a method of counting insects in a container having at least one aperture, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof can occur or be performed simultaneously, at the same point in time, or concurrently.

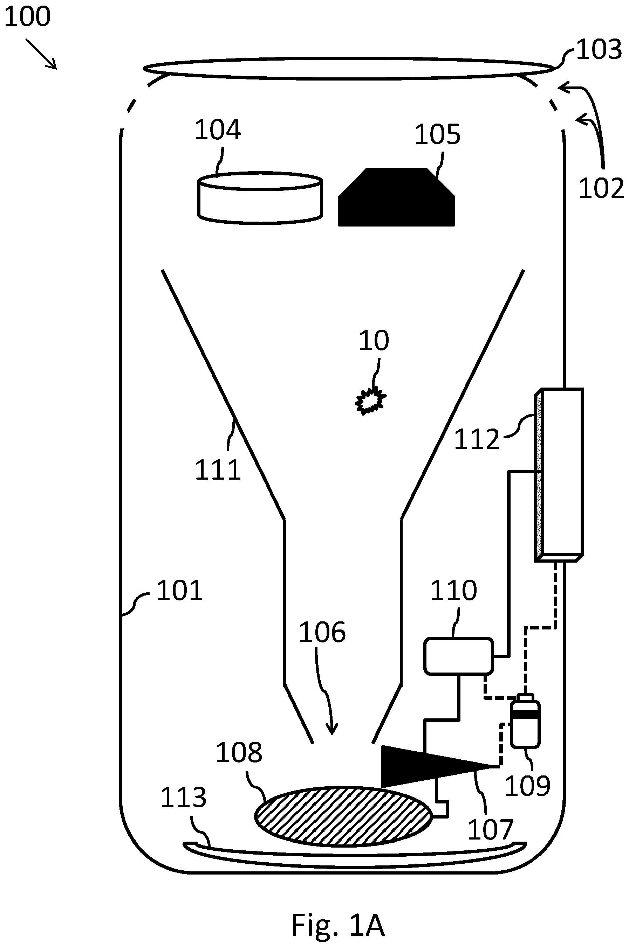

Reference is now made to Fig. 1A which schematically illustrates a cross-sectional view of an insect counting device 100, according to some embodiments of the invention. Insect counting device 100 may be configured to attract insects therein to be trapped, killed, and automatically counted. The insect counting device 100 may be provided as an independent low energy mobile apparatus to be easily connected to different objects in an agricultural area (e.g., connected to a tree).

Insect counting device 100 may include a chamber or container 101 into which one or more insects 10 may be lured, for instance the insects 10 entering via at least one top opening 102 at the top portion of the container 101. In some embodiments, insect counting device 100 may include a water-resistant cover 103 configured to allow entrance of insects 10 through the top opening 102 while preventing other objects from entering, such as prevention of precipitation (e.g., rain drops) entering via the top opening 102.

The container 101 may include at least one pheromone dispenser 104 to attract insects 10 into the container 101, and at least one toxin dispenser 105 to kill at least one insect 10 there within. In some embodiments, the at least one pheromone dispenser 104 and the at least one toxin dispenser 105 may be assembled in a single dispenser with a mixture of volatile compounds configured to attract and/or kill the insects 10. For example, an insect 10 may be attracted to enter the container 101 by the at least one a pheromone dispenser 104 and then killed (e.g., in a few minutes) by the at least one a toxin dispenser 105.

In some embodiments, the container 101 may include at least one aperture 106 to allow insects 10 killed by the at least one a toxin dispenser 105 to fall (e.g., due to gravitational force) through at least one aperture 106 towards at least one sensor 107 in order to count the falling insects 10. The at least one sensor 107 may include at least one of an acoustic sensor, a seismic sensor, and a weight sensor.

The at least one sensor 107 may be coupled to the container 101 and configured to measure at least one parameter, for instance a vibration parameter for measurements of vibration caused by the insects 10. The container 101 may include a receiving surface 108 (e.g., a sheet of plastic or metal having at least partial elasticity) connected to the at least one sensor 107 and configured to vibrate when insects 10 falling through the at least one aperture 106 engage the receiving surface 108. The receiving surface 108 may be positioned in proximity to the at least one aperture 106 such that insects 10 falling through the at least one aperture 106 may engage the receiving surface 108. In some embodiments, vibrations of the receiving surface 108 may be measured by the at least one sensor 107. In some embodiments, sounds caused by engagement of insects 10 with the receiving surface 108 may be measured by the at least one sensor 107 (e.g., an acoustic sensor). In some embodiments, weight changes caused by engagement of insects 10 with the receiving surface 108 may be measured by the at least one sensor 107 (e.g., a weight sensor).

In some embodiments, the receiving surface 108 may be positioned at an angle relative to the at least one aperture 106 such that insects 10 falling onto the receiving surface 108 may continue to fall off the receiving surface 108. In some embodiments, the insect counting device 100 may further include an insect collection chamber 113 (for instance at the bottom of container 101) to collect all insects that fall off the receiving surface 108. In some embodiments, the insect counting device 100 may further include a channel 111 to direct the falling insect towards the at least one aperture 108.

The operation of the at least one sensor 107 may be powered by at least one power source 109. In some embodiments, the power source 109 (e.g., a small battery) may be to allow continued operation of the insect counting device 100 through large periods of time (e.g., a full year) with the power source 109, for instance in contrast to batteries required for insect traps with optical sensors. In some embodiments, the insect counting device 100 may operate in "sleep mode" with only minimal functionality, for instance in predefined time periods, in order to conserve the battery life of the power source 109.

The insect counting device 100 may include a processor 110 coupled to the at least one sensor 107 and configured to receive measured data from the at least one sensor 107 and determine the insects 10 count accordingly. The processor 110 may also be powered by the power source 109. In some embodiments, the processor 110 and at least one sensor 107 may be implemented on a single electrical element.

The processor 110 may analyze the received data from the at least one sensor 107 and detect that at least one measured signal is within a predetermined range, for instance the at least one sensor 107 may measure vibration frequency of the receiving surface 108 upon engagement with an insect 10 and in some embodiments filter out signals outside of a predefined range. In some embodiments, the predetermined range may be calibrated to correspond to a range of signals associated with impact of a single insect 10 on the receiving surface 108. In some embodiments, the receiving surface 108 may include materials having a structure configured to propagate changes caused by impact of a single insect. For example, the receiving surface 108 may be a metal sheet, a plastic sheet (e.g., at least partially elastic), a tin foil, and the like.

In some embodiments, the processor 110 may analyze the signals from at least one sensor 107 to determine at least one of signal intensity, signal pattern and/or signal fingerprint (e.g., specific shape of a signal caused by impact of an insect 10 onto the receiving surface 108).

The processor 110 may add the number of detected at least one signal (within the predetermined range) to an insect counter in order to determine the total count of insects 10 within the container 101.

The insect counting device 100 may include a transmitter 112 coupled to the processor 110 and configured to transmit data from the insect counter to a distant receiver, for instance a multiple insect counting devices 100 may transmit to a central receiver for monitoring, as further described hereinafter. The transmitter 112 may be coupled wirelessly or with a cable to processor 110. The transmitter 112 may also receive power from the power source 109. In some embodiments, transmitter 112 may transmit data wirelessly (e.g., via cellular communication) to a cloud-based server.

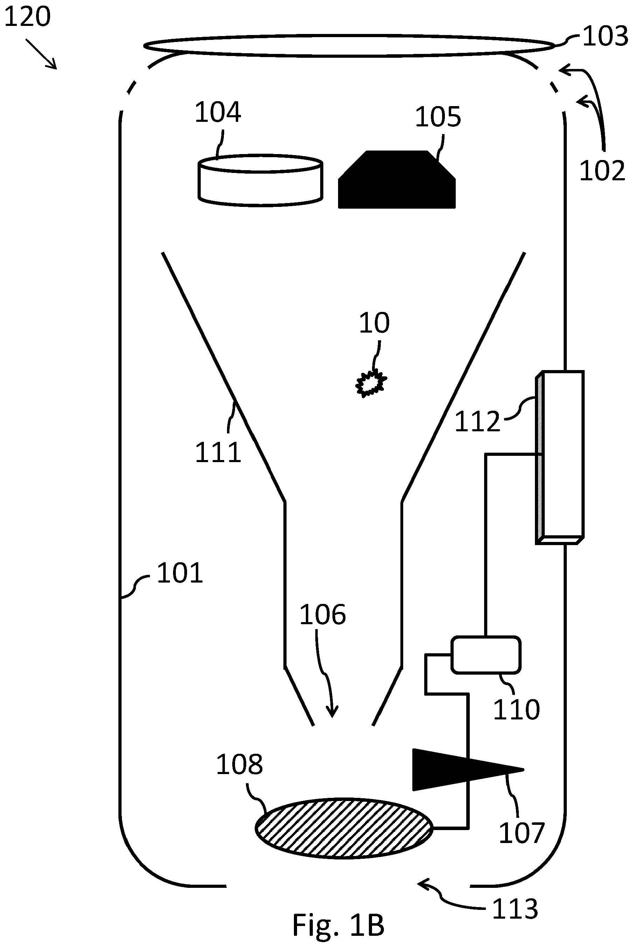

Reference is now made to Fig. 1B which schematically illustrates a cross-sectional view of another insect counting device 120, according to some embodiments of the invention. The container 101 may have a bottom opening 113 such that insects 10 falling through the at least one aperture 106 may engage the receiving surface 108 and fall to exit the container 101 through the bottom opening 113.

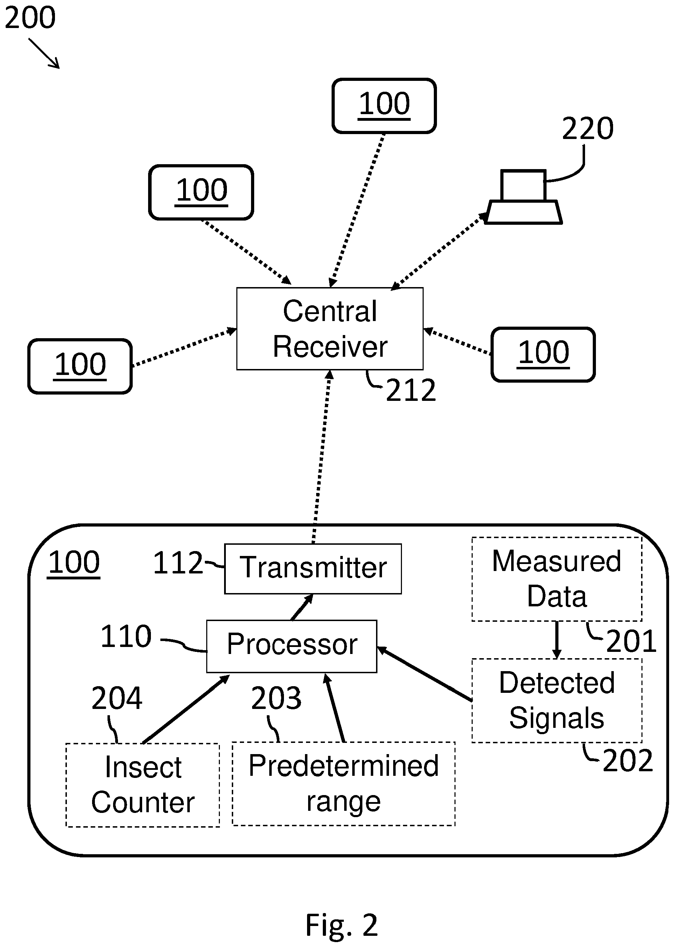

Reference is now made to Fig. 2 which schematically illustrates an insect monitoring system 200, according to some embodiments of the invention. In some embodiments, a plurality of insect counting devices 100 may transmit data to at least one receiver 212 of the insect monitoring system 200. Some elements in Fig. 2 relating to software implemented elements may be indicated with a dashed line.

Each insect counting device 100 may measure signals by at least one sensor 107 (as shown in Figs. 1A-1B) caused by insects 10 engaging the receiving surface 108. The measured data 201 may be analyzed by the processor 110 to detect at least one measured signal 202 is within a predetermined range 203. The processor 110 may add the number of detected signals 202 to an insect counter 204 in order to determine the current count of insects within the insect counting device 100.

According to some embodiments, the processor 110 in each insect counting device 100 may instruct the transmitter 112 to transmit (e.g., wirelessly via Bluetooth and/or cellular communication) data from the insect counter 204 to the central receiver 212 (e.g., to wirelessly transfer data to a cloud-based server via cellular communication) for monitoring. In some embodiments, at least one insect counting device 100 may receive (e.g., wirelessly) data from nearby insect counters 204 and transmit the received data to the central receiver 212. Thus, some insect counting devices 100 may only transmit (e.g., wirelessly) data to a nearby insect counting device 100 capable of transmit (e.g., wirelessly) data to the central receiver 212. Insect counting devices 100 that only transmit data to a nearby insect counting device 100 may consume less electrical power.

The insect count may be transmitted and reported with regard to periods of time as well as to other factors (e.g., temperature and/or humidity). For example, every insect counting device 100 may transmit data from the insect counter 204 to the central receiver 212 once a day, thereby preserving battery life of the power source 109.

Once the owner of the insect monitoring system 200 detects a rise in insect population at a specific insect counting device 100, a predefined amount of pesticide may be automatically or manually released in that area. For example, each insect counting device 100 may be coupled to a container of pesticide to be automatically released when the data from the insect counter 204 exceeds a predefined threshold (e.g., twenty new insects trapped in one day) and a corresponding trigger received from the central receiver 212. In another example, release of pesticide may be carried out over a large area by a dedicated aircraft, and the operator of the aircraft may receive an indication of specific area to be treated when data from the insect counter 204 in that area exceeds a predefined threshold.

In some embodiments, data from the central receiver 212 may be distributed (e.g., wirelessly and/or via the internet) to at least one external device 220, for instance to allow remote monitoring and/or analysis of the data via a dedicated mobile app.

It should be noted that using such system 200, the response time between detection of insects count and the response (e.g., releasing pesticide) may be reduces since all insect counting devices 100 may be constantly monitored. System 200 may also have optimal dispersion of insect counting devices 100 as each insect counting device 100 may be easily attached to any object (e.g., a tree). The amount of man power may also be reduced since there is no longer a need to manually count the insects n each trap. Moreover, the amount of pesticide may be also reduced since only targeted areas where the number of insects is properly counted may be treated, while other areas may not receive any pesticide.

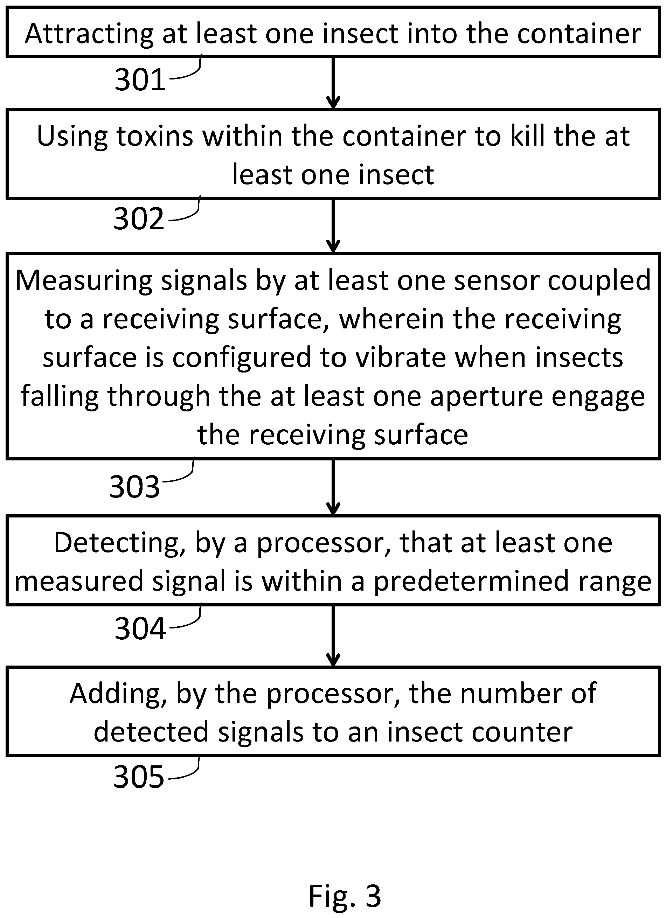

Reference is now made to Fig. 3 which shows a flowchart for a method of counting insects in a container having at least one aperture, according to some embodiments of the invention.

In some embodiments, at least one insect 10 may be attracted 301 into the container 101, for instance with the pheromone dispenser 104. Toxins may be used 302 (e.g., with the toxin dispenser 105) within the container 101 to kill the at least one insect 10. The at least one sensor 107 coupled to a receiving surface 108 may measure 303 signals, wherein the receiving surface may react (e.g., vibrate) when insects 10 falling through the at least one aperture 106 engage the receiving surface 108. The processor 110 may detect 304 that at least one measured signal 201 is within a predetermined range 203, and add 305 the number of detected signals 202 to an insect counter 204. In some embodiments, the at least one sensor 107 may measure 303 signals as vibrations and/or acoustic signals and/or weight changes that occur due to insects 10 falling through the at least one aperture 106 and engaging the receiving surface 108.

Various embodiments have been presented. The scope of the invention is defined by the claims.

## Claims

1. A method of counting insects in a container (101) having at least one aperture (106), the method comprising:
attracting at least one insect into the container (301);
using toxins within the container to kill the at least one insect (302);
measuring signals by at least one sensor coupled to a receiving surface, the method being **characterized by** the fact that the receiving surface is configured to vibrate when insects falling through the at least one aperture engage the receiving surface (303);
and by the step of detecting, by a processor, that at least one measured signal is within a predetermined range (304); and
adding, by the processor, the number of detected signals to an insect counter (305),
wherein the predetermined range is calibrated to correspond to a range of signals associated with impact of a single insect on the receiving surface.

2. The method of claim 1, wherein the at least one sensor comprises at least one of an acoustic sensor, a seismic sensor, and a weight sensor.

3. The method of claim 1 or claim 2, wherein insects fall from the chamber through the at least one aperture (106) due to gravitational force.

4. The method of any of claims 1 to 3, further comprising measuring at least one of intensity, pattern and fingerprint.

5. An insect counting device (100), the device comprising:
a container (101) having at least one aperture (106), wherein the container (101) comprises a pheromone (104) to attract insects (10) and a toxin (105) to kill insects (10) there within;
at least one sensor (107), coupled to the container (101) the insect counting device (100) being **characterized by** the fact that the at least one sensor (107) is
configured to measure a vibration parameter;
and by a receiving surface (108), connected to the at least one sensor (107) and configured to vibrate when insects (10) falling through the at least one aperture (106) engage the receiving surface (108), wherein vibrations of the receiving surface (108) are measured by the at least one sensor (107); and
a processor (110), coupled to the at least one sensor (107), wherein the processor is configured to:
detect that at least one measured signal is within a predetermined range; and
add the number of detected at least one signal to an insect counter,
wherein the predetermined range is calibrated to correspond to a range of signals associated with impact of a single insect (10) on the receiving surface (108).

6. The device of claim 5, wherein the at least one sensor (107) comprises at least one of an acoustic sensor, a seismic sensor, and a weight sensor.

7. The device of claim 5 or claim 6, wherein the receiving surface (108) is positioned in proximity to the at least one aperture (106) such that insects (10) falling through the at least one aperture (106) engage the receiving surface (108).

8. The device of any of claims 5 to 7, wherein the receiving surface (108) is positioned at an angle relative to the at least one aperture (106) such that insects (10) falling onto the receiving surface (108) continue to fall off the receiving surface (108).

9. The device of claim 8, further comprising an insect collection chamber (113) to collect all insects (10) that fall off the receiving surface (108).

10. The device of claim 8, further comprising a channel (111) to direct the falling insect (10) towards the at least one aperture (106).

11. The device of any of claims 5 to 10, further comprising a transmitter (112) coupled to the processor (110) and configured to transmit data from the insect counter to a receiver.

## Patentansprüche

1. Verfahren zum Zählen von Insekten in einem Behälter (101), der mindestens eine Öffnung (106) hat, wobei das Verfahren Folgendes umfasst:
Anlocken mindestens eines Insekts in den Behälter (301);
Verwenden von Giftstoffen innerhalb des Behälters, um das mindestens ein Insekt (302) zu töten;
Messen von Signalen durch mindestens einen Sensor, der mit einer Auffangfläche gekoppelt ist, wobei das Verfahren **dadurch gekennzeichnet ist, dass**
die Auffangfläche dazu konfiguriert ist, zu vibrieren, wenn Insekten, die durch die mindestens eine Öffnung fallen, mit der Auffangfläche (303) in Berührung kommen,
und dass anhand des Schritts eines Erfassens mittels eines Prozessors mindestens ein Messsignal innerhalb eines vorbestimmten Bereichs (304) liegt; und dass
mittels des Prozessors die Anzahl der erfassten Signale einem Insektenzähler (305) aufaddiert werden,
wobei der vorbestimmte Bereich entsprechend kalibriert ist, sodass er einem Bereich von Signalen entspricht, die mit dem Effekt, den ein einzelnes Insekt auf die Auffangfläche hat, assoziiert ist.

2. Verfahren nach Anspruch 1, wobei der mindestens eine Sensor mindestens einen von einem akustischen Sensor, einem seismischen Sensor und einem Gewichtssensor umfasst.

3. Verfahren nach Anspruch 1 oder Anspruch 2, wobei Insekten aufgrund von Schwerkraft durch die mindestens eine Öffnung (106) aus der Kammer fallen.

4. Verfahren nach einem der Ansprüche 1 bis 3, ferner umfassend Messen von mindestens einem hiervon: Intensität, Muster und Fingerabdruck.

5. Insektenzählvorrichtung (100), wobei die Vorrichtung Folgendes umfasst:
einen Behälter (101), der mindestens eine Öffnung (106) hat, wobei der Behälter (101) ein Pheromon (104) umfasst, um Insekten (10) anzulocken und einen Giftstoff (105), um Insekten (10), zu töten, die hierin sind;
mindestens einen Sensor (107), der mit dem Behälter (101) gekoppelt ist, wobei die Insektenzählvorrichtung (100) **dadurch gekennzeichnet ist, dass** der mindestens eine Sensor (107) dazu konfiguriert ist, einen Vibrationsparameter zu messen;
sowie dadurch, dass eine Auffangfläche (108), die mit dem mindestens einen Sensor (107) verbunden ist, dazu konfiguriert ist, zu vibrieren, wenn Insekten (10), die durch die mindestens eine Öffnung (106) fallen, mit der Auffangfläche (108) in Berührung kommen, wobei Vibrationen der Auffangfläche (108) von dem mindestens einen Sensor (107) gemessen werden, und
einen Prozessor (110), der mit dem mindestens einen Sensor (107) gekoppelt ist, wobei der Prozessor wie folgt konfiguriert ist:
um zu erfassen, dass mindestens ein Messsignal innerhalb des vorbestimmten Bereichs ist; und
um die Zahl mindestens eines Signals, das erfasst wurde, einem Insektenzähler zuzuaddieren, wobei der vorbestimmte Bereich derart kalibriert ist, um einem Signalbereich zu entsprechen, der mit dem Effekt, den ein einzelnes Insekt (10) auf die Auffangfläche (108) hat, assoziiert ist.

6. Vorrichtung nach Anspruch 5, wobei der mindestens eine Sensor (107) mindestens einen von einem akustischen Sensor, einem seismischen Sensor und einem Gewichtssensor umfasst.

7. Vorrichtung nach Anspruch 5 oder Anspruch 6, wobei die Auffangfläche (108) in der Nähe der mindestens einen Öffnung (106) positioniert ist, derart, dass Insekten (10), die durch die mindestens eine Öffnung (106) fallen, in Kontakt mit der Auffangfläche (108) treten.

8. Vorrichtung nach einem der Ansprüche 5 bis 7, wobei die Auffangfläche (108) in einem Winkel in Relation zu der mindestens einen Öffnung (106) positioniert ist, derart, dass Insekten (10), die durch die mindestens eine Öffnung (106) fallen, weiter- und von der Auffangfläche (108) herabfallen.

9. Vorrichtung nach Anspruch 8, ferner umfassend eine Insekten-Sammelkammer (113), um sämtliche Insekten (10), die von der Auffangfläche (108) herabfallen, aufzufangen.

10. Vorrichtung nach Anspruch 8, ferner umfassend einen Kanal (111), um die fallenden Insekten (10) zu der mindestens einen Öffnung (106) hinzulenken.

11. Vorrichtung nach einem der Ansprüche 5 bis 10, ferner umfassend einen Sender (112), der mit dem Prozessor (110) gekoppelt und dazu konfiguriert ist, Daten von dem Insektenzähler an einen Empfänger zu senden.

## Revendications

1. Procédé de comptage d'insectes dans un récipient (101) ayant au moins une ouverture (106), le procédé consistant à :
attirer au moins un insecte dans le récipient (301) ;
utiliser des toxines à l'intérieur du récipient pour tuer ledit insecte (302) ;
mesurer des signaux captés par au moins un capteur couplé à une surface de réception, le procédé étant **caractérisé par le fait que**
la surface de réception est configurée pour vibrer lorsque des insectes tombant à travers la ou les ouvertures engagent la surface de réception (303) ; et
par l'étape de détection, par un processeur, qu'au moins un signal mesuré se trouve dans une plage prédéterminée (304) ; et
ajouter, par le processeur, le nombre de signaux détectés à un compteur d'insectes (305),
la plage prédéterminée étant calibrée pour correspondre à une plage de signaux associés à l'impact d'un seul insecte sur la surface de réception.

2. Procédé selon la revendication 1, dans lequel l'au moins un capteur comprend au moins un capteur parmi un capteur acoustique, un capteur sismique et un capteur de poids.

3. Procédé selon la revendication 1 ou la revendication 2, dans lequel les insectes tombent de la chambre à travers au moins une ouverture (106) en raison de la force gravitationnelle.

4. Procédé selon l'une quelconque des revendications 1 à 3, comprenant en outre la mesure d'au moins l'un parmi l'intensité, le motif et l'empreinte digitale.

5. Dispositif de comptage d'insectes (100), le dispositif comprenant
un récipient (101) ayant au moins une ouverture (106), le récipient (101) comprenant une phéromone (104) pour attirer les insectes (10) et une toxine (105) pour tuer les insectes (10) à l'intérieur du récipient ;
au moins un capteur (107), couplé au récipient (101), le dispositif de comptage d'insectes (100) étant **caractérisé par le fait que** :
l'au moins un capteur (107) est configuré pour mesurer un paramètre de vibration ; et
par une surface de réception (108), connectée audit au moins un capteur (107) et configurée pour vibrer lorsque des insectes (10) tombant à travers ladite au moins une ouverture (106) entrent en contact avec la surface de réception (108), les vibrations de la surface de réception (108) étant mesurées par le ou les capteurs (107) ;
et
un processeur (110), couplé audit au moins un capteur (107), le processeur étant configuré pour :
détecter qu'au moins un signal mesuré se trouve dans une plage prédéterminée ; et
ajouter le nombre d'au moins un signal détecté à un compteur d'insectes,
la plage prédéterminée étant calibrée pour correspondre à une plage de signaux associés à l'impact d'un seul insecte (10) sur la surface de réception (108).

6. Dispositif selon la revendication 5, dans lequel l'au moins un capteur (107) comprend au moins un capteur parmi un capteur acoustique, un capteur sismique et un capteur de poids.

7. Dispositif selon la revendication 5 ou la revendication 6, dans lequel la surface de réception (108) est positionnée à proximité de l'au moins une ouverture (106) de telle sorte que les insectes (10), tombant à travers l'au moins une ouverture (106), engagent la surface de réception (108).

8. Dispositif selon l'une quelconque des revendications 5 à 7, dans lequel la surface de réception (108) est positionnée selon un angle par rapport à l'au moins une ouverture (106) de telle sorte que les insectes (10), tombant sur la surface de réception (108), continuent à tomber de la surface de réception (108).

9. Dispositif selon la revendication 8, comprenant en outre une chambre de collecte d'insectes (113) pour collecter tous les insectes (10) qui tombent de la surface de réception (108).

10. Dispositif selon la revendication 8, comprenant en outre un canal (111) conçu pour diriger l'insecte tombant (10) vers l'au moins une ouverture (106).

11. Dispositif selon l'une quelconque des revendications 5 à 10, comprenant en outre un émetteur (112) couplé au processeur (110) et configuré pour transmettre des données du compteur d'insectes à un récepteur.
